# EUROPÄISCHE PATENTANMELDUNG

(11) **EP 4 207 561 A1**
(43) Veröffentlichungstag der Anmeldung: **05.07.2023**
(21) Anmeldenummer: 23158664.5
(22) Anmeldetag: 16.08.2013
(51) Int. Cl.: H02K 3/12, H02K 7/18

(54) **SEGMENTIERBARER STATOR**

(62) Teilanmeldung aus: 17001953.3
(71) Anmelder: Flender GmbH, 46395 Bocholt (DE)
(72) Erfinder: BOGDAN, Zolt, 46395 Bocholt (DE); BRENNER, Robin, 46395 Bocholt (DE); LINDMEIER, Andreas, 46395 Bocholt (DE); RATZISBERGER, Dominik, 46395 Bocholt (DE); SCHÖNBAUER, Norbert, 46395 Bocholt (DE); TERINGL, Claus, 46395 Bocholt (DE)
(74) Vertreter: Michalski Hüttermann & Partner Patentanwälte mbB

(57) **Zusammenfassung**

Ein Stator (10) mit nicht fortlaufender Einschichtwicklung (20) ist entlang mindestens eines Radialschnitts (30i) segmentierbar, der senkrecht zu einer Transversalebene (33) des Stators (10) verläuft und sich mit keiner Spule (4U, 4V, 4W) der Einschichtwicklung (20) schneidet. Mindestens eine der Spulen (4U, 4V, 4W) weist einen ersten Nutabschnitt (41N), einen ersten Richtungswechselabschnitt (41RW) und einen Stirnabschnitt (4S) auf. Der erste Richtungswechselabschnitt (41RW) ist zwischen dem ersten Nutabschnitt (41N) und dem Stirnabschnitt (4S) angeordnet. Der erste Richtungswechselabschnitt (41RW) weist einen Krümmungsradius (r41RW) auf, der kleiner ist als ein Krümmungsradius (r4S) des Stirnabschnitts (4S) .

Die Erfindung betrifft auch einen Synchrongenerator, der einen erfindungsgemäßen Stator (10) umfasst.

## Beschreibung

Die Erfindung betrifft einen Stator mit nicht fortlaufender Einschichtwicklung, wobei der Stator entlang mindestens eines Radialschnitts segmentierbar ist, der senkrecht zu einer Transversalebene des Stators verläuft und sich mit keiner Spule der Einschichtwicklung schneidet, wobei mindestens eine der Spulen einen ersten Nutabschnitt, einen ersten Richtungswechselabschnitt und einen Stirnabschnitt aufweist, wobei der erste Richtungswechselabschnitt zwischen dem ersten Nutabschnitt und dem Stirnabschnitt angeordnet ist.

Außerdem betrifft die Erfindung einen Synchrongenerator.

Um bewickelte Statoren für Stromerzeugungsgeneratoren mit mehr als 2,5 Megawatt Nennleistung in kostengünstiger Weise zum Verwendungsort transportieren zu können, werden die bewickelten Statoren bevorzugt in Segmenten ausgeführt. Die Statorsegmente werden erst am Verwendungsort zusammengesetzt. Die Segmentierbarkeit (Aufteilbarkeit) ist hilfreich für den Transport des bewickelten Stators. Dies ändert aber nichts daran, dass solche Statoren nach dem Zusammensetzen am Verwendungsort trotzdem sehr schwer sind. Dies hat beispielsweise den Nachteil, dass ein Turm einer Windkraftanlage auf die hohe Traglast des Stromerzeugungsgenerators auszulegen ist, welche zum großen Teil durch das Gewicht des Stators bestimmt wird.

Der Erfindung liegt die Aufgabe zugrunde, einen segmentierbaren Stator für einen Stromerzeugungsgenerator bereitzustellen, der bei gleicher Nennleistung ein niedrigeres Gewicht als bekannte segmentierbare Statoren aufweist.

Erfindungsgemäß wird die Aufgabe durch einen Stator mit nicht fortlaufender Einschichtwicklung gelöst, wobei der Stator entlang mindestens eines Radialschnitts segmentierbar ist, der senkrecht zu einer Transversalebene des Stators verläuft und sich mit keiner Spule der Einschichtwicklung schneidet. Mindestens eine der Spulen weist einen ersten Nutabschnitt, einen ersten Richtungswechselabschnitt und einen Stirnabschnitt auf. Der erste Richtungswechselabschnitt ist zwischen dem ersten Nutabschnitt und dem Stirnabschnitt angeordnet. Der erste Richtungswechselabschnitt weist einen Krümmungsradius auf, der kleiner ist als ein Krümmungsradius des Stirnabschnitts.

Entsprechend weist der Synchrongenerator einen erfindungsgemäßen Stator auf.

Ein Konzept der vorliegenden Erfindung kann darin gesehen werden, dass eine Nennleistungsdichte (beispielsweise in MW pro Kubikmeter) eines segmentierbaren Stators erhöht wird, indem eine axiale Ausdehnung (Ausladung) mindestens einer der beiden Wickelköpfe des segmentierbaren Stators durch eine besondere Formgebung der eingelegten Spulen (beispielsweise um 5% oder um 10%) verringert wird. Damit wird ein segmentierbarer Stator für einen Stromerzeugungsgenerator bereitgestellt, der bei gleicher Nennleistung ein niedrigeres Gewicht als bekannte segmentierbare Statoren aufweist. Hierdurch kann beispielsweise ein Turm einer Windkraftanlage auf eine niedrigere Traglast ausgelegt werden. Eine weitere Möglichkeit besteht darin, den Gewichtsgewinn ganz oder teilweise dafür zu nutzen, um auf einem Turm gleicher Tragfähigkeit einen leistungsfähigeren Synchrongenerator vorzusehen. Die Leistungssteigerung des Synchrongenerators im Vergleich zu bekannten Synchrongeneratoren kann beispielsweise dadurch erreicht werden, dass die Verkürzung des Wickelkopfes in der Hauptlängsrichtung dazu genutzt wird, eine Länge des Blechpakets (Eisenpakets) in der Hauptlängsrichtung zu vergrößern. Alternativ oder zusätzlich können für die Spulenwindungen dickere Kupferstäbe und/oder zusätzliche Windungen vorgesehen werden. Die axiale Ausdehnung eines Wickelkopfes nach dem Stand der Technik beträgt beispielsweise 20 cm.

Eine bevorzugte Ausführungsform sieht vor, dass eine axiale Ausdehnung einer ersten Projektion einer Kante des Stirnabschnitts gemeinsam mit einer Kante des ersten Richtungswechselabschnitts und gemeinsam mit einer Kante des zweiten Richtungswechselabschnitts auf eine Projektionsebene um mindestens 4% kürzer ist, vorzugsweise um mindestens 8% kürzer ist, als eine axiale Ausdehnung einer zweiten Projektion auf eine Projektionsebene einer entsprechenden Kante wäre, wenn die zweite Projektion in der Projektionsebene kreisbogenförmig wäre, wobei die Projektionsebene senkrecht zur Transversalebene angeordnet ist.

Eine weitere Ausführungsform sieht vor, dass eine erste Projektion einer Kante des Stirnabschnitts auf eine Projektionsebene näherungsweise ellipsenbogenförmig oder evolventenabschnittförmig verläuft, wobei die Projektionsebene senkrecht zur Transversalebene angeordnet ist. Alternativ oder zusätzlich kann eine erste Projektion einer Kante des Stirnabschnitts auf eine Projektionsebene zwei Viertelkreise und einen geraden Streckenabschnitt umfassen, wobei die Projektionsebene senkrecht zur Transversalebene angeordnet ist. Alternativ oder zusätzlich kann eine erste Projektion einer Kante des Stirnabschnitts gemeinsam mit einer Kante des ersten Richtungswechselabschnitts und gemeinsam mit einer Kante des zweiten Richtungswechselabschnitts auf eine Projektionsebene näherungsweise ellipsenbogenförmig oder evolventenabschnittförmig verlaufen, wobei die Projektionsebene senkrecht zur Transversalebene angeordnet ist. Wenn die Projektion der jeweiligen Kante einen stetig differenzierbaren Verlauf aufweist, können mechanische Spannungsspitzen in dem Spulenkopf weitgehend vermieden werden.

Es kann zweckmäßig sein, wenn eine dritte Projektion einer Kante des Stirnabschnitts einer ersten Spule eines fortlaufenden Abschnitts der Einschichtwicklung auf eine Transversalebene des Stators eine erste Form aufweist, die im geometrischen Sinne nicht ähnlich ist zu einer zweiten Form einer vierten Projektion einer Kante des Stirnabschnitts einer zweiten Spule des fortlaufenden Abschnitts der Einschichtwicklung auf die Transversalebene. Durch unterschiedliche Formgebung der Stirnabschnitte einer ersten und einer zweiten Spule eines fortlaufenden Abschnitts der Einschichtwicklung kann eine Nutzung des verfügbaren Bauraums optimiert werden.

Von Vorteil kann es sein, wenn eine dritte Projektion einer Kante des Stirnabschnitts einer der Spulen der Einschichtwicklung auf die Transversalebene des Stators geradlinig verläuft. Hierdurch ist für diese Spule eine besonders einfache und besonders kompakte Bauweise erzielbar.

Alternativ oder zusätzlich kann ein besonders kompakter Aufbau des Wickelkopfes auch dadurch erreicht werden, wenn ein Umfang einer radial weiter außen liegenden ersten Windung einer ersten Spule der Einschichtwicklung kleiner ist als ein Umfang einer radial weiter innen liegenden Windung der ersten Spule, wenn der Stator ein Innenstator ist. Entsprechend kann ein besonders kompakter Aufbau des Wickelkopfes auch dadurch erreicht werden, wenn ein Umfang einer radial weiter innen liegenden ersten Windung einer ersten Spule der Einschichtwicklung kleiner ist als ein Umfang einer radial weiter außen liegenden Windung der ersten Spule, wenn der Stator ein Au-βenstator ist.

Typischerweise verläuft der erste Nutabschnitt in einer Hauptlängsrichtung des Stators und/oder entlang einer Mantelfläche des Stators näherungsweise geradlinig. Alternativ oder zusätzlich kann auch der zweite Nutabschnitt in einer Hauptlängsrichtung des Stators und/oder entlang einer Mantelfläche des Stators näherungsweise geradlinig verlaufen. Hierdurch ist ein einfacher Aufbau des Blechpakets möglich, und es kann ein gewünschter magnetischer Fluss mit minimaler Leiterlänge erreicht werden.

Zweckmäßig ist, wenn der Stator mindestens ein zerstörungsfrei separierbares s-Grad-Segment aufweist, wobei s gleich 360°/n beträgt und der Segmentteilungsfaktor n jeden Wert zwischen 1 und 27 annehmen kann. Typischerweise ist der Segmentteilungsfaktor n gleich 2, gleich 3, gleich 6, gleich 9 oder gleich 12. Durch Wahl des Segmentteilungsfaktors kann eine Größe der Statorsegmente an Transportmöglichkeiten zwischen einem Herstellungsort und einem Betriebsort des Stators angepasst werden.

Für bestimmte Anwendungen (beispielsweise im Stromerzeugungsbereich) ist es von Vorteil, wenn der Stator einen Außendurchmesser von mindestens 260 cm hat. Alternativ oder zusätzlich kann eine axiale Länge eines Eisenpakets des Stators mindestens 50 cm, vorzugsweise mindestens 100 cm, betragen. Alternativ oder zusätzlich kann der Stator eine Poolpaarzahl von mindestens 100, insbesondere bevorzugt eine Poolpaarzahl von 162, aufweisen. Elektrische Maschinen mit solchen Auslegungsparametern eignen sich für Anwendungen im Energieerzeugungsbereich.

Der Stator kann als Innenstator für eine elektrische Maschine, insbesondere für eine permanentmagnet-erregte elektrische Maschine, mit einem Außenläufer vorgesehen sein. Hierdurch eignet sich der Stator besonders gut für eine Anwendung im Bereich der Stromerzeugung aus Windenergie.

Die Erfindung ist anhand der beigefügten Zeichnungen näher erläutert, in denen zeigen:
- FIG 1: schematisch eine perspektivische Detailansicht eines mit einer nicht fortlaufenden Einschichtwicklung bewickelten Statorsegments für eine Synchronmaschine mit Außenläufer;
- FIG 2: schematisch die Ansicht des bewickelten Statorsegments mit einer (gedachten) Projektion von Kanten von Spulenabschnitten im Bereich des Wickelkopfes auf eine gedachte Projektionsebene, die senkrecht zu einer Transversalebene des Stators angeordnet ist;
- FIG 3: schematisch die Ansicht des bewickelten Statorsegments mit einer (gedachten) Projektion von Kanten von Spulenabschnitten im Bereich des Wickelkopfes auf eine gedachte Transversalebene des Stators.

Die nachfolgend näher geschilderten Ausführungsbeispiele stellen bevorzugte Ausführungsformen der vorliegenden Erfindung dar.

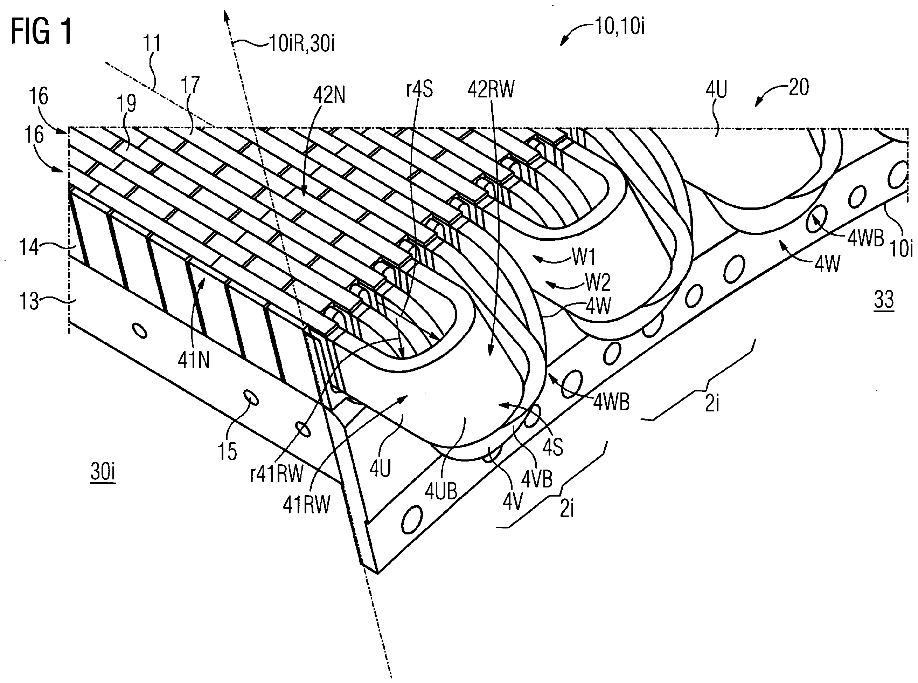

Das in FIG 1 im perspektivischen Ausschnitt gezeigte bewickelte Statorsegment 10i umfasst eine Tragkonstruktion 13, ein Blechpaket 14 und eine nicht durchgängige Einschichtwicklung 20. Das bewickelte Statorsegment 10i kann im bewickelten Zustand mit mindestens einem weiteren gleichartigen Statorsegment 10i mechanisch verbunden werden (beispielsweise mittels Verschrauben, Vernieten, Verrasten, Umbördeln, Verschweißen oder Verkleben). Die Figur zeigt hierfür Befestigungslöcher 15.

Das Blechpaket 14 umfasst mehrere in Hauptlängsrichtung 11 verlaufende Nuten 16, in die jeweils ein Längsstrang (Nutabschnitt 41N, 42N) einer Spule 4U, 4V, 4W eingelegt ist. Die Nuten 16 sind auf einer Mantelseite 19 des bewickelten Innenstatorsegments 10i (bzw. Innenseite eines in den Figuren nicht dargestellten bewickelten Außenstatorsegments) jeweils mit einer Nutabdeckung 17 abgedeckt oder verschlossen. Die Hauptlängsrichtung 11 kann auch als Axialrichtung bezeichnet werden.

Das bewickelte Statorsegment 10i weist typischerweise mindestens eine (in FIG 1 nicht dargestellte) Beschaltungsseite auf, die dazu vorgesehen ist, Spulen 4U, 4V, 4W eines selben Statorsegments 10i und/oder verschiedener Statorsegmente 10i miteinander zu verschalten und/oder den bewickelten Stator (d.h. dessen Statorsegmente 10i) mit einer (in den Figuren nicht dargestellten) Stromversorgungssenke und/oder einer Stromversorgungsquelle elektrisch zu verbinden.

Auch die in Hauptlängsrichtung 11 diametral gegenüberliegende Stirnseite 10iS des bewickelten Statorsegments 10i (die in der FIG 1 dargestellt ist) kann ebenfalls dazu vorgesehen sein, Spulen 4U, 4V, 4W eines selben Statorsegments 10i und/oder verschiedener Statorsegmente 10i miteinander zu verschalten und/oder den bewickelten Stator (d.h. dessen Statorsegmente 10i) mit einer (in den Figuren nicht dargestellten) Stromversorgungssenke und/oder einer Stromversorgungsquelle elektrisch zu verbinden. Typischerweise ist auf dieser (zweiten) Stirnseite 10iS jedoch keine dieser Beschaltungen vorgesehen. Auf dieser Stirnseite 10iS sind Spulenbögen 4UB, 4VB, 4WB vorgesehen. Mit jedem Spulenbogen 4UB, 4VB, 4WB werden jeweils mindestens zwei Längsstränge 41N, 42N einer (zum Spulenbogen 4UB, 4VB, 4WB) zugehörigen Spule 4U, 4V, 4W miteinander elektrisch verbunden.

Die FIG 1 bis 3 zeigen Spulen 4U, deren Spulenbögen 4UB nicht in einer Radialrichtung 10iR abgewinkelt sind (sogenannte 0°-Spulen), Spulen 4V, deren Spulenbögen 4VB um 45° entgegen einer jeweiligen Radialrichtung 10iR abgewinkelt sind (sogenannte 45°-Spulen) und Spulen 4W, deren Spulenbögen 4WB um 90° entgegen einer jeweiligen Radialrichtung 10iR abgewinkelt sind (sogenannte 90°-Spulen). Bei einem Innenstator 10 sind abgewinkelte Spulenbögen in der Regel entgegen einer jeweiligen Radialrichtung 10iR (also nach innen) abgewinkelt. Bei einem Außenstator sind abgewinkelte Spulenbögen in der Regel in einer jeweiligen Radialrichtung (also nach außen) abgewinkelt.

Die Spulenbögen 4UB, 4VB, 4WB verlaufen typischerweise nicht in Nuten 16 des Blechpakets 14. Die Spulenbögen 4UB, 4VB, 4WB ragen daher stirnseitig aus dem Statorsegment 10i heraus, ohne dass dem damit verbundenen Gewicht und dem damit verbundenen Raumbedarf ein Beitrag einer magnetischen Flussdichte oder ein Beitrag zum elektromagnetisch erzeugten Drehmoment gegenübersteht. Um ein Gewicht des bewickelten Statorsegments 10i zu minimieren, sind die Spulenbögen 4UB, 4VB, 4WB auf der Stirnseite 10iS des Statorsegments 10i nicht kreisbogenförmig, sondern mit einem Verlauf aneinander vorbeigeführt, der bezüglich der Hauptlängsrichtung 11 abgeflacht ist.

Das Leitermaterial für die Windungen der Spulen wird zur Bewicklung des unbewickelten Statorsegments typischerweise auf sogenannten Endlosrollen bereitgestellt. Das Leitermaterial besteht typischerweise aus einem oder mehreren gewalzten oder gezogenen Kupfersträngen. Der Querschnitt eines Leiters beträgt beispielsweise 4 mm mal 8 mm. Vor dem Einlegen wird das Leitermaterial beispielsweise mittels einer Schablone gebogen. Eine Spule weist beispielsweise 20 bis 30 Windungen auf, ist beispielsweise zwischen 1 und 2 m lang und hat beispielsweise ein Gewicht von 30 bis 70 kg.

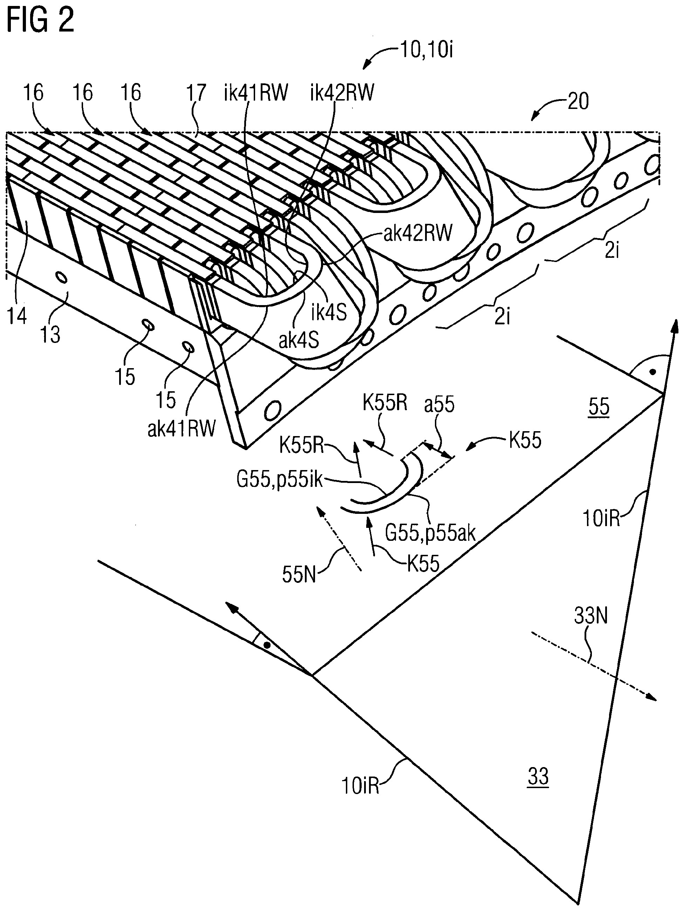

Die FIG 2 zeigt eine Projektion p55ik einer Innenkante ik4S und einer Außenkante ak4S eines Spulenbogens 4UB, 4VB, 4WB auf eine (gedachte) Projektionsebene 55, deren Flächennormale 55N in einer Radialrichtung 10iR des Statorsegments 10i verläuft. Der Verlauf der Projektion p55ik, p55ak der Innenkante ik4S und/oder der Außenkante ak4S hat in der Projektionsebene 55 die Form eines Ellipsebogenstücks oder eines Evolventenabschnitts. Alternativ kann der Verlauf auch zwei in gleicher Krümmungsrichtung K55R verlaufende Viertelkreise K55 umfassen, die über einen geraden Streckenabschnitt G55 miteinander verbunden sind.

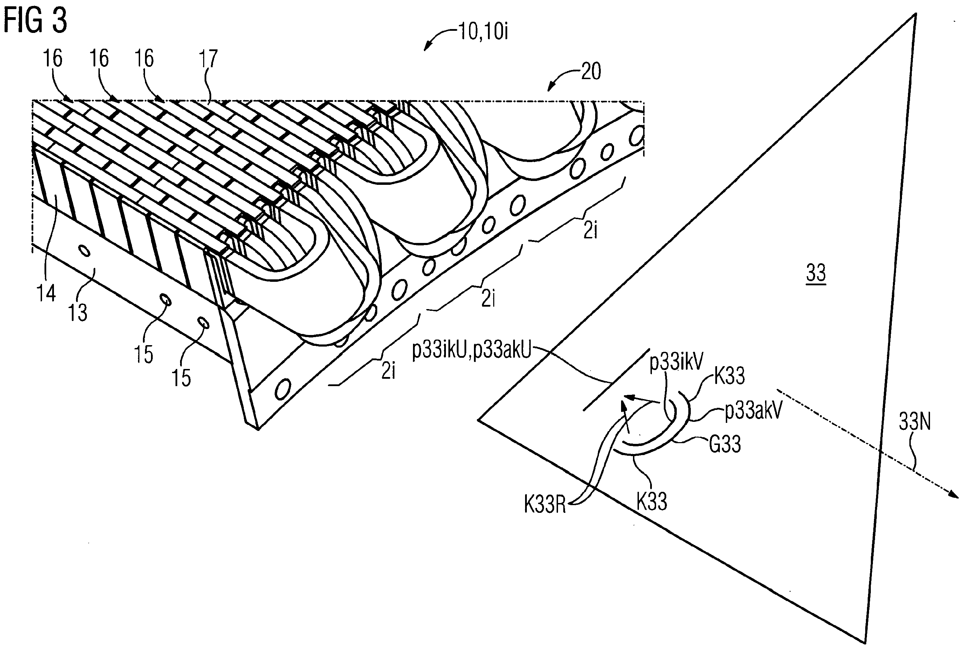

Die FIG 3 zeigt eine Projektion p33ik einer Innenkante ik4S und einer Außenkante ak4S eines Spulenbogens 4UB, 4VB, 4WB auf eine (gedachte) Transversalebene 33, deren Flächennormale 33N parallel zu einer Hauptlängsrichtung 11 des Statorsegments 10iS verläuft. Der Verlauf der Projektion pik4S, pak4S der Innenkante ik4S und/oder der Außenkante ik4S hat in der Transversalebene 33 die Form eines Ellipsenbogenstücks oder eines Evolventenabschnitts. Alternativ kann der Verlauf auch zwei in gleicher Krümmungsrichtung K33R verlaufende Viertelkreise K33 umfassen, die über einen geraden Streckenabschnitt G33 miteinander verbunden sind.

Ein bevorzugte Ausführungsform sieht vor, dass die Projektion pik4S, pak4S einer äußeren pak4S und/oder einer inneren pik4S Kante eines gesamten Spulenbogens 4UB, 4VB, 4WB einer Spule 4U, 4V, 4W eines fortlaufenden Abschnitts 2i der Einschichtwicklung 20 den Verlauf einer geraden Strecke aufweist.

Typischerweise ist je fortlaufendem Abschnitt 2i der Einschichtwicklung 20 je elektrischer Phase u, v, w genau eine Spule 4U, 4W, 4V vorgesehen.

Vorzugsweise wird der Stator 10 in einem Dreiphasensystem genutzt.

In einer Ausführungsform ist ein Stator 10 mit nicht fortlaufender Einschichtwicklung 20 entlang mindestens eines Radialschnitts 30i segmentierbar, der senkrecht zu einer Transversalebene 33 des Stators 10 verläuft und sich mit keiner Spule 4U, 4V, 4W der Einschichtwicklung 20 schneidet. Hierbei weist mindestens eine der Spulen 4U, 4V, 4W einen ersten Nutabschnitt 41N, einen ersten Richtungswechselabschnitt 41RW und einen ersten Stirnabschnitt 4S auf. Der erste Richtungswechselabschnitt 41RW ist zwischen dem ersten Nutabschnitt 41N und dem Stirnabschnitt 4S angeordnet. Der erste Richtungswechselabschnitt 41RW weist einen Krümmungsradius r41RW auf, der kleiner ist als ein Krümmungsradius r4S des Stirnabschnitts 4S.

Außerdem wird ein Synchrongenerator bereitgestellt, der einen erfindungsgemäßen Stator 10 umfasst.

## Patentansprüche

1. Stator (10) mit nicht fortlaufender Einschichtwicklung (20), wobei der Stator (10) entlang mindestens eines Radialschnitts (30i) segmentierbar ist, der senkrecht zu einer Transversalebene (33) des Stators (10) verläuft und sich mit keiner Spule (4U, 4V, 4W) der Einschichtwicklung (20) schneidet, wobei mindestens eine der Spulen (4U, 4V, 4W) einen ersten Nutabschnitt (41N), einen ersten Richtungswechselabschnitt (41RW) und einen Stirnabschnitt (4S) aufweist, wobei der erste Richtungswechselabschnitt (41RW) zwischen dem ersten Nutabschnitt (41N) und dem Stirnabschnitt (4S) angeordnet ist, wobei der erste Richtungswechselabschnitt (41RW) einen Krümmungsradius (r41RW) aufweist, der kleiner ist als ein Krümmungsradius (r4S) des Stirnabschnitts (4S), **da**- **durch gekennzeichnet** , dass ein Umfang einer radial weiter außen liegenden ersten Windung (W1) einer ersten Spule (4U) der Einschichtwicklung (20) kleiner ist als ein Umfang einer radial weiter innen liegenden Windung (W2) der ersten Spule (4U), wenn der Stator (10) ein Innenstator ist und/oder dass ein Umfang einer radial weiter innen liegenden ersten Windung (W1) einer ersten Spule (4U) der Einschichtwicklung (20) kleiner ist als ein Umfang einer radial weiter außen liegenden Windung (W2) der ersten Spule (4U), wenn der Stator (10) ein Außenstator ist.

2. Stator (10) nach Anspruch 1, **dadurch gekenn-zeichnet**, dass eine erste Projektion (p55ik, p55ak) einer Kante (ik4S, ak4S) des Stirnabschnitts (4S) auf eine Projektionsebene (55) näherungsweise ellipsenbogenförmig oder evolventenabschnittförmig verläuft, wobei die Projektionsebene (55) senkrecht zur Transversalebene (33) angeordnet ist, und/oder dass eine erste Projektion (p55ik, p55ak) einer Kante (ik4S, ak4S) des Stirnabschnitts (4S) gemeinsam mit einer Kante (ik41RW, ak41RW) des ersten Richtungswechselabschnitts (41RW) und gemeinsam mit einer Kante (ik42RW, ak42RW) des zweiten Richtungswechselabschnitts (42RW) auf eine Projektionsebene (55) näherungsweise ellipsenbogenförmig oder evolventenabschnittförmig verläuft, wobei die Projektionsebene (55) senkrecht zur Transversalebene (33) angeordnet ist.

3. Stator (10) nach Anspruch 1 oder 2, **dadurch gekennzeichnet, dass** eine dritte Projektion (p33ikU, p33akU) einer Kante (ik4S, ak4S) des Stirnabschnitts (4S) einer der Spulen (4U, 4V, 4W) der Einschichtwicklung (20) auf die Transversalebene (33) des Stators (10) geradlinig verläuft.

4. Stator (10) nach einem der Ansprüche 1 bis 3, **da**- **durch gekennzeichnet** , dass der erste (41N) und/oder der zweite (42N) Nutabschnitt in einer Hauptlängsrichtung (11) des Stators (10) und/oder entlang einer Mantelfläche (19) des Stators (10) näherungsweise geradlinig verläuft.

5. Stator (10) nach einem der Ansprüche 1 bis 4, **da**- **durch gekennzeichnet** , dass der Stator (10) mindestens ein zerstörungsfrei separierbares s-Grad-Segment (10i) aufweist, wobei s gleich 360°/n beträgt und ein Segmentteilungsfaktor n jeden Wert zwischen 1 und 27 annehmen kann, und/oder dass der Stator (10) als Innenstator für eine elektrische Maschine, insbesondere für eine permanentmagnet-erregte elektrische Maschine, mit einem Außenläufer vorgesehen ist.

6. Stator (10) nach einem der Ansprüche 1 bis 5, **da**- **durch gekennzeichnet** , dass der Stator (10) einen Außendurchmesser von mindestens 260 cm hat und/ oder dass eine axiale Länge eines Eisenpakets (14) des Stators (10) mindestens 50 cm, vorzugsweise mindestens 100 cm, beträgt und/oder dass der Stator (10) eine Poolpaarzahl von mindestens 100, insbesondere bevorzugt eine Poolpaarzahl von 162, aufweist.

7. Synchrongenerator, **dadurch gekenn- zeichnet**, dass der Synchrongenerator einen Stator (10) nach einem der Ansprüche 1 bis 6 umfasst.

8. Energieerzeugungsanlage, insbesondere Windenergieanlage mit einem Synchrongenerator nach Anspruch 7.
